# EUROPEAN PATENT SPECIFICATION

(11) **EP 4 549 793 B1**
(45) Date of publication and mention of the grant of the patent: **19.08.2026**
(21) Application number: 23831606.1
(22) Date of filing: 29.06.2023
(51) Int. Cl.: F16L 15/04, E21B 17/042, F16L 15/00, F16L 15/08, F16L 58/18

(54) **OIL-WELL METAL PIPE**
METALLROHR FÜR ÖLBOHRUNGEN
TUBE MÉTALLIQUE POUR PUITS DE PÉTROLE

(30) Priority: 01.07.2022 JP 2022107193
(43) Date of publication of application: 07.05.2025
(73) Proprietor: NIPPON STEEL CORPORATION, Chiyoda-ku Tokyo 100-8071 (JP); Vallourec Oil and Gas France, 59620 Aulnoye-Aymeries (FR)
(72) Inventor: AKIOKA, Koji, Tokyo 100-8071 (JP); MATSUYAMA, Tomoya, Tokyo 100-8071 (JP); KURANISHI, Takao, Tokyo 100-8071 (JP); ISHII, Kazuya, Tokyo 100-8071 (JP); YAMAOKA, Ikuro, Tokyo 100-0006 (JP)
(74) Representative: J A Kemp LLP
(86) International application number: PCT/JP2023/024285
(87) International publication number: WO 2024/005167

(56) References cited:
- WO-A1-2020/145162
- WO-A1-2022/045209
- JP-A- 2002 348 587
- JP-A- 2013 205 084
- JP-A- 2015 232 703
- JP-A- 2022 000 536
- JP-A- 2022 000 536
- JP-U- H04 101 890
- US-A1- 2020 292 107

## Description

### TECHNICAL FIELD

The present disclosure relates to an oil-well metal pipe.

### BACKGROUND ART

An oil-well metal pipe is used in oil wells and natural gas wells (hereinafter, oil wells and natural gas wells are collectively referred to as "oil wells"). Specifically, at an oil well drilling site, a plurality of oil-well metal pipes are connected to form an oil country tubular goods connected body as typified by a casing pipe or a tubing pipe. The oil country tubular goods connected body is formed by fastening threaded connections to each other. The oil country tubular goods connected body may be subjected to inspections. When inspection is conducted, the oil country tubular goods connected body is lifted up and loosened. The oil-well metal pipes are then detached from the oil country tubular goods connected body by loosening, and are inspected. After the inspection, the threaded connections are refastened to each other, and the oil-well metal pipes are reused as a part of the oil country tubular goods connected body.

An oil-well metal pipe includes a pin and a box. The pin has a pin contact surface, which includes an external thread part, on an outer peripheral surface of an end portion of the oil-well metal pipe. The box has a box contact surface, which includes an internal thread part, on an inner peripheral surface of an end portion of the oil-well metal pipe. In the present description, the external thread part and the internal thread part are also collectively referred to as "thread parts". As used herein, the pin contact surface and the box contact surface are also collectively referred to as "contact surfaces". The pin contact surface may further include a pin unthread metal contact portion, which includes a pin sealing surface and a pin shoulder surface. Likewise, the box contact surface may further include a box unthread metal contact portion, which includes a box sealing surface and a box shoulder surface.

The contact surfaces repeatedly experience strong friction during fastening and loosening of the oil-well metal pipe. For that reason, in the contact surface, galling (unrepairable galling) is liable to occur when the fastening and loosening are repeated. Therefore, the oil-well metal pipe is required to have sufficient durability against friction, that is, to have excellent galling resistance.

Conventionally, compound greases containing heavy metal powder called as dopes have been used to improve the galling resistance of an oil-well metal pipe. Applying a compound grease to the contact surface makes it possible to improve the galling resistance of the oil-well metal pipe. However, heavy metal powder of Pb, Zn, and Cu, etc. contained in the compound greases may affect the environments. For that reason, development of an oil-well metal pipe that is excellent in galling resistance even without the use of a compound grease is desired.

Technology for enhancing the galling resistance of an oil-well metal pipe is proposed in, for example, Japanese Patent Application Publication No. 2002-348587 (Patent Literature 1) and International Application Publication No. 2006/104251 (Patent Literature 2).

In the oil-well metal pipe disclosed in Patent Literature 1, a solid lubricant coating made up of lubricant powder and a binder is formed on the contact surface of a pin and/or a box. The lubricant powder is made up of one or two kinds selected from molybdenum disulfide powder and tungsten disulfide powder, and graphite powder. The graphite powder accounts for 2 to 20 mass% of the lubricant powder. Patent Literature 1 discloses that this oil-well metal pipe can enhance the galling resistance of oil-well metal pipes.

The oil-well metal pipe disclosed in Patent Literature 2 has a lubricant coating of a viscous liquid or a semi solid on the contact surface of a pin and/or a box, and a dry solid coating formed thereon. Patent Literature 2 discloses that the oil-well metal pipe can suppress occurrence of rust and enhance galling resistance and gastightness even without use of compound grease.

### CITATION LIST

### PATENT LITERATURE

Patent Literature 1: Japanese Patent Application Publication No. 2002-348587
Patent Literature 2: International Application Publication No. 2006/104251

### SUMMARY OF INVENTION

### TECHNICAL PROBLEM

Meanwhile, in an oil-well metal pipe, it is desirable that high-torque performance is high. The phrase "high-torque performance is high" means that torque-on-shoulder resistance is large. The term "torque-on-shoulder resistance" means the difference between a yield torque at which one part of a threaded connection (a pin or a box) of the oil-well metal pipe yields, and a shouldering torque at which interference between threaded connections (the pin and the box) rapidly increases.

If the torque-on-shoulder resistance is large, it becomes easy to adjust the fastening torque. Even when the oil-well metal pipe does not have a shoulder surface, if the torque increases stably, it becomes easy to adjust the fastening torque.

With the coating disclosed in Patent Literature 1 and Patent Literature 2, the galling resistance of the oil-well metal pipe can be enhanced. However, Patent Literature 1 and Patent Literature 2 have not done any study on the high-torque performance.

It is an object of the present disclosure to provide an oil-well metal pipe having excellent high-torque performance.

### SOLUTION TO PROBLEM

An oil-well metal pipe according to the present disclosure includes
a pipe main body including a first end portion and a second end portion,
the pipe main body including:
   a pin formed in the first end portion; and
   a box formed in the second end portion, wherein:
      the pin includes a pin contact surface including an external thread part; and
      the box includes a box contact surface including an internal thread part,
      the oil-well metal pipe further including
      a resin coating formed as an uppermost layer on the pin contact surface and/or on the box contact surface, wherein:
         the resin coating contains an epoxy resin, and
         when the resin coating is measured by a ¹H pulse NMR method, and an obtained free induction decay signal is separated into three components of a high mobility component, a medium mobility component, and a low mobility component in the order from a component having a longer spin-spin relaxation time T₂, a weighted average value of the spin-spin relaxation time T₂ of the three components is 110.0 µs or less.

### ADVANTAGEOUS EFFECTS OF INVENTION

An oil-well metal pipe according to the present disclosure has excellent high-torque performance.

### BRIEF DESCRIPTION OF DRAWINGS

[FIG. 1] FIG. 1 is a graph illustrating the relation between the number of turns of an oil-well metal pipe which has a shoulder surface and the torque, when the oil-well metal pipe is fastened.
[FIG. 2] FIG. 2 is a graph illustrating the relation between the relaxation time T₂ and the torque-on-shoulder resistance ΔT of a resin coating containing an epoxy resin.
[FIG. 3] FIG. 3 is a side view of an oil-well metal pipe according to the present embodiment.
[FIG. 4] FIG. 4 is a partial cross-sectional view to illustrate a cross section (longitudinal cross section) parallel to the pipe axial direction, of a coupling of the oil-well metal pipe illustrated in FIG. 3.
[FIG. 5] FIG. 5 is a cross-sectional view, which is parallel to the pipe axis direction of the oil-well metal pipe, of a portion in the vicinity of a pin of the oil-well metal pipe illustrated in FIG. 4.
[FIG. 6] FIG. 6 is a cross-sectional view, which is parallel to the pipe axis direction of the oil-well metal pipe, of a portion in the vicinity of a box of the oil-well metal pipe illustrated in FIG. 4.
[FIG. 7] FIG. 7 is a partial cross-sectional view including a longitudinal cross section of the oil-well metal pipe of the present embodiment having a configuration different from that in FIG. 3.
[FIG. 8] FIG. 8 is a partial cross-sectional view including a longitudinal cross section of an integral type oil-well metal pipe according to the present embodiment.
[FIG. 9] FIG. 9 is a cross-sectional view of the vicinity of the pin contact surface of an oil-well metal pipe according to the present embodiment.
[FIG. 10] FIG. 10 is a cross-sectional view of a vicinity of the box contact surface corresponding to FIG. 9.
[FIG. 11] FIG. 11 is a cross-sectional view of a vicinity of a pin contact surface according to the present embodiment, which is different from that of FIG. 9.
[FIG. 12] FIG. 12 is a cross-sectional view of a vicinity of the box contact surface corresponding to FIG. 11.

### DESCRIPTION OF EMBODIMENTS

Hereinafter, referring to the drawings, the present embodiment will be described in detail. The like or corresponding parts are given like symbols throughout the drawings, and the description thereof will not be repeated.

The present inventors have conducted a study on how to enhance the high-torque performance of an oil-well metal pipe. As a result, the following findings have been obtained.

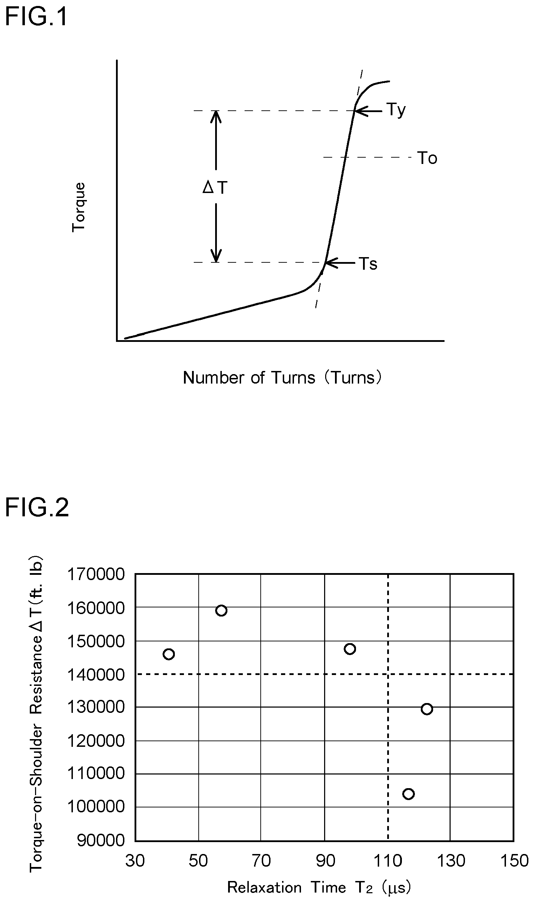

When fastening oil-well metal pipes to each other, an optimal torque to end the fastening is determined in advance. FIG. 1 is a graph illustrating the relation between the number of turns of an oil-well metal pipe which has a shoulder surface and the torque, when the oil-well metal pipe is fastened. With reference to FIG. 1, when oil-well metal pipes are fastened, initially the torque increases moderately in proportion to the number of turns. As the fastening is further continued, the shoulder surfaces come in contact with each other. The torque at such time is referred to as "shouldering torque Ts". After the shouldering torque Ts is reached, when the fastening is further continued, the torque rapidly increases in proportion to the number of turns. The fastening is completed at a time point at which the torque reaches a predetermined value (fastening torque To). At the fastening torque To, the contact surfaces interfere with each other with an appropriate interfacial pressure. In this case, the oil-well metal pipes can achieve excellent gastightness. If excessive fastening is further continued after reaching the fastening torque To, a torque will reach a yield torque Ty, and portions of the pin and the box will yield. In the present description, the difference between the shouldering torque Ts and the yield torque Ty is referred to as "torque-on-shoulder resistance ΔT".

Note that, as a different form of an oil-well metal pipe, an oil-well metal pipe which has a wedge thread and does not have a shoulder surface is available. In the case of such kind of oil-well metal pipe that has a wedge thread, as well, similarly to an oil-well metal pipe that has a shoulder surface, the relation between the number of turns of the oil-well metal pipe and the torque will be as shown in FIG. 1.

Here, the term "wedge thread" means a thread having the following structure. In the external thread part of a wedge thread, along with the screwing direction of the pin, the width of the thread ridge is gradually narrowed along the thread helix, and the width of the thread groove is gradually widened along the thread helix. Further, in the internal thread part of a wedge thread, along with the screwing direction of the box, the width of the thread groove of the internal thread part is gradually narrowed along the thread helix, and the width of the thread ridge is gradually widened along the thread helix. In the case of an oil-well metal pipe which has a wedge thread, as fastening progresses, the load flanks, and the stabbing flanks of the external thread part and the internal thread part come in contact with each other, and locking (interference fitting) occurs. The torque at the time when locking occurs is also referred to as "locking torque" or "locked flank torque".

In the present description, unless specifically stated otherwise, locking torque and shouldering torque will not be distinguished from each other, and are referred to as "shouldering torque Ts". In the case of an oil-well metal pipe having a wedge thread, as well, similarly to an oil-well metal pipe having a shoulder surface, if fastening is continued further after reaching the shouldering torque Ts, the torque will rapidly increase in proportion to the number of turns. That is, after the shouldering torque Ts is reached, the interference between the threaded connections (a pin and a box) increases rapidly. If the fastening is continued further thereafter, the fastening torque To will be reached. If excessive fastening is further continued after reaching the fastening torque To, the yield torque Ty will be reached and portions of the pin and the box will yield.

As disclosed in Patent Literature 1 and Patent Literature 2, there is known an oil-well metal pipe having a coating containing a resin. Accordingly, the present inventors considered that the high-torque performance of oil-well metal pipe can be enhanced by forming a resin coating on the oil-well metal pipe.

The present inventors have first conducted a study on the resin to be contained in the resin coating. The present inventors considered that if a resin having high adhesion to metal is contained in the resin coating, peeling of the resin coating can be suppressed even if shearing force is generated by fastening. Accordingly, the present inventors have conducted a study on resins that have high adhesion to metal. As a result, the following findings have been obtained.

Epoxy resin is a thermosetting synthetic resin having a reactive epoxy group at its end. A typical epoxy resin is a bisphenol A type epoxy resin. The bisphenol A type epoxy resin has a secondary alcoholic hydroxyl group in the repeating unit. Epoxy resin has higher adhesion to metal than other resins. The reason why the epoxy resin has high adhesion to metal is not clear, but the following two reasons are considered. (1) The hydroxyl group in the epoxy resin forms hydrogen bonds with a hydroxyl group on the metal surface. (2) Regarding the adhesion between iron and zinc, and the epoxy resin, the phenoxy group is involved in the adhesion interface.

The present inventors considered that if an epoxy resin is contained in the resin coating, peeling of the resin coating can be prevented even if shear force is generated by the fastening. Accordingly, the present inventors have conducted studies to enhance the high-torque performance of a resin coating containing an epoxy resin. As a result, the following findings have been obtained.

The present inventors have investigated the relation between the crosslink density and the torque-on-shoulder resistance ΔT of a resin coating containing an epoxy resin. An epoxy resin coatings having different crosslink densities were formed on a steel plate. The steel plate having the epoxy resin coating was subjected to a Bowden sliding test to measure an initial friction coefficient. From the initial friction coefficient, the torque-on-shoulder resistance ΔT was determined by an FEM analysis. The results are shown in FIG. 2.

The abscissa of FIG. 2 indicates a weighted average value (µs) of spin-spin relaxation time T₂ when the epoxy resin coating is measured by ¹H pulse NMR. The spin-spin relaxation time T₂ in FIG. 2 is a weighted average value of the spin-spin relaxation time T₂ of three components when the epoxy resin coating was measured by a ¹H pulse NMR method, and an obtained free induction decay signal was separated into three components of a high mobility component, a medium mobility component, and a low mobility component in the order from a component having a longer spin-spin relaxation time T₂. The ordinate of FIG. 2 indicates the torque-on-shoulder resistance ΔT (ft. lb). Where, the spin-spin relaxation time T₂ is an index showing the decay characteristics of magnetization strength.

The crosslink density of a resin is proportional to the reciprocal of the spin-spin relaxation time T₂ obtained by the ¹H pulse NMR method. In other words, the higher the crosslink density of a resin, the shorter the spin-spin relaxation time T₂. With reference to FIG. 2, if the weighted average value of the spin-spin relaxation time T₂ is small, the torque-on-shoulder resistance ΔT increases. That is, if the crosslink density of an epoxy resin coating is high, the torque-on-shoulder resistance ΔT increases. Specifically, when the weighted average value of the spin-spin relaxation time T₂ is 110.0 µs or less, the torque-on-shoulder resistance ΔT increases. An oil-well metal pipe provided with a resin coating having a high torque-on-shoulder resistance ΔT is excellent in high-torque performance.

From the above studies, the present inventors considered that the high-torque performance of an oil-well metal pipe can be enhanced by increasing the crosslink density of the resin coating containing an epoxy resin. Specifically, when the weighted average value of the spin-spin relaxation time T₂ of the resin coating containing the epoxy resin is 110.0 µs or less, the high-torque performance of the oil-well metal pipe is enhanced.

It is not clear why the high-torque performance of an oil-well metal pipe can be enhanced by increasing the crosslink density of the resin coating containing an epoxy resin. However, in examples described later, it has been shown that if the weighted average value of the spin-spin relaxation time T₂ of the resin coating containing an epoxy resin is 110.0 µs or less, the high-torque performance of the oil-well metal pipe can be enhanced.

The gist of the oil-well metal pipe of the present embodiment that has been completed based on the findings described so far is as follows.

[1] An oil-well metal pipe, including:
   a pipe main body including a first end portion and a second end portion,
   the pipe main body including:
      a pin formed in the first end portion; and
      a box formed in the second end portion, wherein:
         the pin includes a pin contact surface including an external thread part; and
         the box includes a box contact surface including an internal thread part,
         the oil-well metal pipe further including
         a resin coating formed as an uppermost layer on the pin contact surface and/or on the box contact surface, wherein:
            the resin coating contains an epoxy resin, and
            when the resin coating is measured by a ¹H pulse NMR method, and an obtained free induction decay signal is separated into three components of a high mobility component, a medium mobility component, and a low mobility component in the order from a component having a longer spin-spin relaxation time T₂, a weighted average value of the spin-spin relaxation time T₂ of the three components is 110.0 µs or less.
[2] The oil-well metal pipe according to [1], wherein
   when the resin coating is measure by the ¹H pulse NMR method, a ratio of the medium mobility component to a total of the high mobility component, the medium mobility component, and the low mobility component is higher than the ratio of the low mobility component to the total.
[3] The oil-well metal pipe according to [1] or [2], further including:
   one or more kinds selected from a group consisting of a phosphate coating, a plating layer, a chromate coating, and a zirconium coating between the pin contact surface and the resin coating, and/or between the box contact surface and the resin coating.

Hereinafter, the oil-well metal pipe according to the present embodiment will be described in detail.

### [Structure of oil-well metal pipe]

First, the structure of an oil-well metal pipe of the present embodiment will be described. The oil-well metal pipe has a well-known structure. The available types of oil-well metal pipe are a T&C type oil-well metal pipe and an integral type oil-well metal pipe. Hereinafter, each type of oil-well metal pipe will be described in detail.

### [When oil-well metal pipe 1 is T&C type]

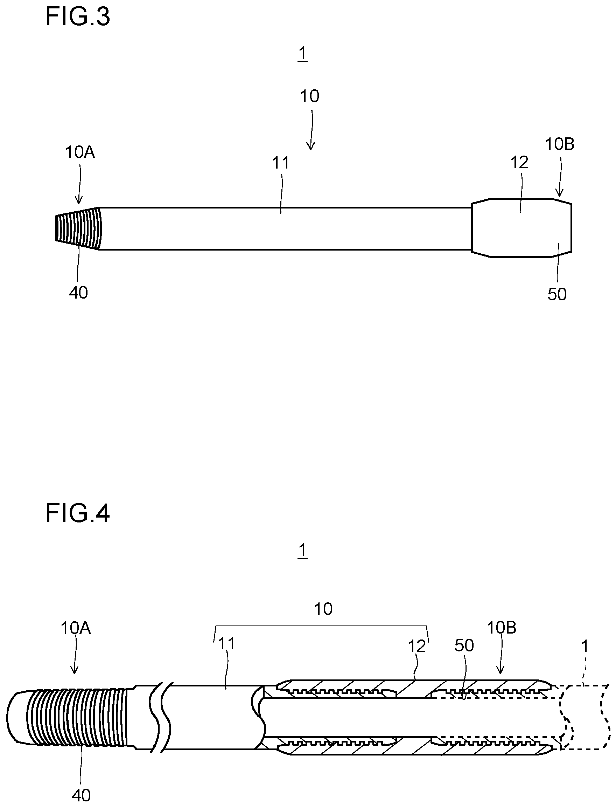

FIG. 3 is a side view of an oil-well metal pipe 1 according to the present embodiment. FIG. 3 is a side view of an oil-well metal pipe 1 of a so-called T&C (Threaded and Coupled) type. Referring to FIG. 3, the oil-well metal pipe 1 includes a pipe main body 10.

The pipe main body 10 extends in the pipe axis direction. A cross section perpendicular to the pipe axis direction of the pipe main body 10 is of a circular shape. The pipe main body 10 includes a first end portion 10A and a second end portion 10B. The first end portion 10A is an end portion on the opposite side to the second end portion 10B. In the T&C type oil-well metal pipe 1 shown in FIG. 3, the pipe main body 10 includes a pin tube body 11 and a coupling 12. The coupling 12 is attached to one end of the pin tube body 11. More specifically, the coupling 12 is fastened by threading to the one end of the pin tube body 11.

FIG. 4 is a partial cross-sectional view to illustrate a cross section (longitudinal cross section) parallel to the pipe axis direction of the coupling 12 of the oil-well metal pipe 1 illustrated in FIG. 3. Referring to FIGS. 3 and 4, the pipe main body 10 includes a pin 40 and a box 50. The pin 40 is formed at the first end portion 10A of the pipe main body 10. At the time of fastening, the pin 40 is inserted into the box 50 of another oil-well metal pipe 1 (not shown) to be fastened by threading to the box 50 of the other oil-well metal pipe 1.

The box 50 is formed at the second end portion 10B of the pipe main body 10. At the time of fastening, a pin 40 of another oil-well metal pipe 1 is inserted into the box 50, and thus the box 50 is fastened by threading to the pin 40 of the other oil-well metal pipe 1.

### [Structure of pin 40]

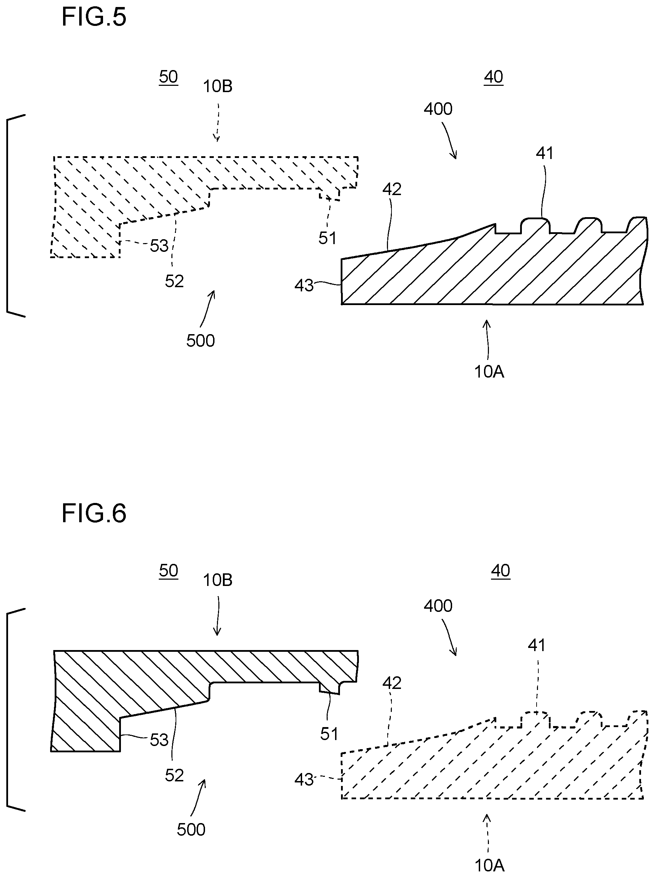

FIG. 5 is a cross-sectional view, which is parallel to a pipe axis direction of the oil-well metal pipe 1, of a portion in the vicinity of a pin 40 of the oil-well metal pipe 1 illustrated in FIG. 4. A dashed line portion in FIG. 5 represents the structure of the box 50 of another oil-well metal pipe 1 in the case of fastening to the other oil-well metal pipe 1. Referring to FIG. 5, the pin 40 includes a pin contact surface 400 on an outer peripheral surface of the first end portion 10A of the pipe main body 10. At the time of fastening to another oil-well metal pipe 1, the pin contact surface 400 is screwed into the box 50 of the other oil-well metal pipe 1 to come into contact with the box contact surface 500 (to be described later) of the box 50.

The pin contact surface 400 includes at least an external thread part 41 formed on the outer peripheral surface of the first end portion 10A. The pin contact surface 400 may further include a pin sealing surface 42 and a pin shoulder surface 43. In FIG. 5, the pin shoulder surface 43 is disposed at the front end face of the first end portion 10A, and the pin sealing surface 42 is disposed on the front end side of the first end portion 10A with respect to the external thread part 41 in the outer peripheral surface of the first end portion 10A. That is, the pin sealing surface 42 is disposed between the external thread part 41 and the pin shoulder surface 43. The pin sealing surface 42 is provided in a tapered shape. Specifically, in the pin sealing surface 42, the external diameter thereof gradually decreases from the external thread part 41 toward the pin shoulder surface 43 in the longitudinal direction (pipe axis direction) of the first end portion 10A.

At the time of fastening to another oil-well metal pipe 1, the pin sealing surface 42 comes into contact with the box sealing surface 52 (to be described later) of the box 50 of the other oil-well metal pipe 1. More specifically, at the time of fastening, as a result of the pin 40 being inserted into the box 50 of another oil-well metal pipe 1, the pin sealing surface 42 comes into contact with the box sealing surface 52. Then, as a result of the pin 40 being further screwed into the box 50 of another oil-well metal pipe 1, the pin sealing surface 42 comes into close contact with the box sealing surface 52. As a result, at the time of fastening, the pin sealing surface 42 comes into close contact with the box sealing surface 52, thus forming a seal based on metal-metal contact. For that reason, it is possible to improve gastightness in mutually fastened oil-well metal pipes 1.

In FIG. 5, the pin shoulder surface 43 is disposed at a front end face of the first end portion 10A. That is, in the pin 40 illustrated in FIG. 5, an external thread part 41, a pin sealing surface 42, and a pin shoulder surface 43 are disposed in that order from the center of the pipe main body 10 toward the first end portion 10A. At the time of fastening to another oil-well metal pipe 1, the pin shoulder surface 43 opposes and contacts the box shoulder surface 53 (to be described later) of the box 50 of another oil-well metal pipe 1. More specifically, at the time of fastening, as a result of the pin 40 being inserted into the box 50 of another oil-well metal pipe 1, the pin shoulder surface 43 comes into contact with the box shoulder surface 53. As a result of this, at the time of fastening, it is possible to achieve a high torque. Moreover, it is possible to stabilize the positional relation between the pin 40 and the box 50 in a fastened state.

Note that the pin contact surface 400 of the pin 40 includes at least the external thread part 41. That is, the pin contact surface 400 includes the external thread part 41, and needs not include the pin sealing surface 42 and the pin shoulder surface 43. The pin contact surface 400 includes the external thread part 41 and the pin shoulder surface 43, and needs not include the pin sealing surface 42. The pin contact surface 400 includes the external thread part 41 and the pin sealing surface 42, and needs not include the pin shoulder surface 43.

### [Structure of box 50]

FIG. 6 is a cross-sectional view, which is parallel to the pipe axis direction of the oil-well metal pipe 1, of a portion in the vicinity of a box 50 of the oil-well metal pipe 1 illustrated in FIG. 4. A dashed line portion in FIG. 6 represents the structure of the pin 40 of another oil-well metal pipe 1 in the case of fastening to the other oil-well metal pipe 1. Referring to FIG. 6, the box 50 includes a box contact surface 500 on an inner peripheral surface of the second end portion 10B of the pipe main body 10. At the time of fastening to another oil-well metal pipe 1, the pin 40 of the other oil-well metal pipe 1 is screwed into the box 50, and the box contact surface 500 comes into contact with the pin contact surface 400 of the pin 40.

The box contact surface 500 includes at least an internal thread part 51 formed in the inner peripheral surface of the second end portion 10B. At the time of fastening, the internal thread part 51 engages with the external thread part 41 of the pin 40 of the other oil-well metal pipe 1.

The box contact surface 500 may further include a box sealing surface 52 and a box shoulder surface 53. In FIG. 6, the box sealing surface 52 is disposed on the pipe main body 10 side with respect to the internal thread part 51, in the inner peripheral surface of the second end portion 10B. That is, the box sealing surface 52 is disposed between the internal thread part 51 and the box shoulder surface 53. The box sealing surface 52 is provided in a tapered shape. Specifically, the internal diameter of the box sealing surface 52 gradually decreases from the internal thread part 51 toward the box shoulder surface 53 in the longitudinal direction (pipe axis direction) of the second end portion 10B.

At the time of fastening to another oil-well metal pipe 1, the box sealing surface 52 comes into contact with the pin sealing surface 42 of the pin 40 of the other oil-well metal pipe 1. More specifically, at the time of fastening, as the result of the pin 40 of the other oil-well metal pipe 1 being screwed into the box 50, the box sealing surface 52 comes into contact with the pin sealing surface 42, and as a result of the pin 40 being screwed in further, the box sealing surface 52 comes into close contact with the pin sealing surface 42. As the result of this, at the time of fastening, the box sealing surface 52 comes into close contact with the pin sealing surface 42, thereby forming a seal based on metal-metal contact. Therefore, it is possible to improve the gastightness in the mutually fastened oil-well metal pipes 1.

In Fig. 6, The box shoulder surface 53 is disposed on the pipe main body 10 side with respect to the box sealing surface 52. That is, in the box 50, the box shoulder surface 53, the box sealing surface 52 and the internal thread part 51 are disposed in that order from the center of the pipe main body 10 toward the front end of the second end portion 10B. At the time of fastening to another oil-well metal pipe 1, the box shoulder surface 53 opposes and contacts the pin shoulder surface 43 of the pin 40 of the other oil-well metal pipe 1. More specifically, at the time of fastening, as a result of the pin 40 of the other oil-well metal pipe 1 being inserted into the box 50, the box shoulder surface 53 comes into contact with the pin shoulder surface 43. As the result of this, at the time of fastening, it is possible to achieve a high torque. Further, it is possible to stabilize the positional relation between the pin 40 and the box 50 in a fastened state.

The box contact surface 500 includes at least the internal thread part 51. At the time of fastening, the internal thread part 51 of the box contact surface 500 of the box 50 corresponds to the external thread part 41 of the pin contact surface 400 of the pin 40, and comes into contact with the external thread part 41. The box sealing surface 52 corresponds to the pin sealing surface 42, and comes into contact with the pin sealing surface 42. The box shoulder surface 53 corresponds to the pin shoulder surface 43, and comes into contact with the pin shoulder surface 43.

When the pin contact surface 400 includes the external thread part 41 and does not include the pin sealing surface 42 and the pin shoulder surface 43, the box contact surface 500 includes the internal thread part 51, and does not include the box sealing surface 52 and the box shoulder surface 53. When the pin contact surface 400 includes the external thread part 41 and the pin shoulder surface 43 and does not include the pin sealing surface 42, the box contact surface 500 includes the internal thread part 51 and the box shoulder surface 53, and does not include the box sealing surface 52. When the pin contact surface 400 includes the external thread part 41 and the pin sealing surface 42 and does not include the pin shoulder surface 43, the box contact surface 500 includes the internal thread part 51 and the box sealing surface 52, and does not include the box shoulder surface 53.

The pin contact surface 400 may include a plurality of the external thread parts 41, may include a plurality of the pin sealing surfaces 42, and may include a plurality of the pin shoulder surfaces 43. For example, on the pin contact surface 400 of the pin 40, the pin shoulder surface 43, the pin sealing surface 42, the external thread part 41, the pin sealing surface 42, the pin shoulder surface 43, the pin sealing surface 42 and the external thread part 41 may be disposed in that order from the front end of the first end portion 10A toward the center of the pipe main body 10. In this case, on the box contact surface 500 of the box 50, the internal thread part 51, the box sealing surface 52, the box shoulder surface 53, the box sealing surface 52, the internal thread part 51, the box sealing surface 52 and the box shoulder surface 53 are disposed in that order from the front end of the second end portion 10B toward the center of the pipe main body 10.

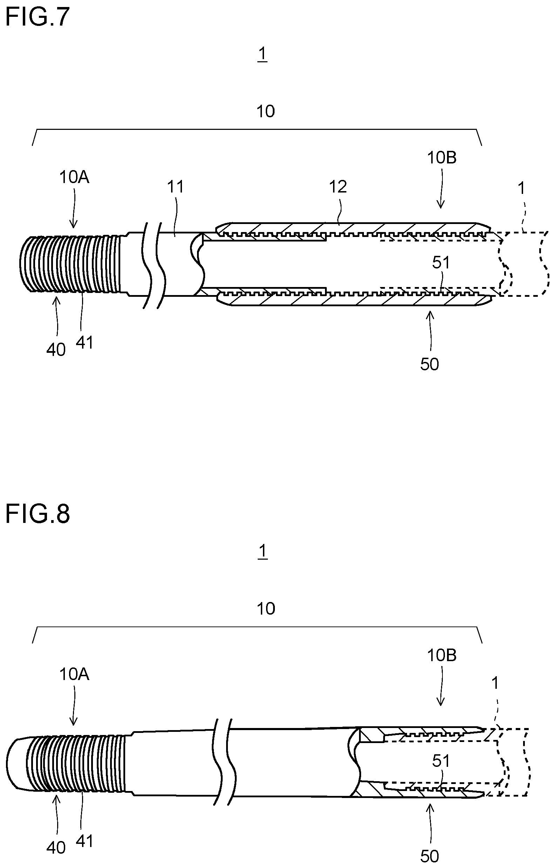

FIGS. 5 and 6 illustrate a so-called premium joint in which a pin 40 includes an external thread part 41, a pin sealing surface 42, and a pin shoulder surface 43, and a box 50 includes an internal thread part 51, a box sealing surface 52, and a box shoulder surface 53. However, as described above, the pin 40 includes the external thread part 41 and needs not include the pin sealing surface 42 and the pin shoulder surface 43. In this case, the box 50 includes the internal thread part 51 and does not include the box sealing surface 52 and the box shoulder surface 53. FIG. 7 is a partial cross-sectional view including a longitudinal cross section of the oil-well metal pipe of the present embodiment having a configuration different from that in FIG. 3.

### [When oil-well metal pipe 1 is integral type]

The oil-well metal pipe 1 illustrated in FIG. 3, FIG. 4 and FIG. 7 is a so-called T&C type oil-well metal pipe 1, in which the pipe main body 10 includes the pin tube body 11 and the coupling 12. However, the oil-well metal pipe 1 according to the present embodiment may be of an integral type instead of a T&C type.

FIG. 8 is a partial cross-sectional view including a longitudinal cross section of an integral type oil-well metal pipe 1 according to the present embodiment. Referring to FIG. 8, the integral type oil-well metal pipe 1 includes a pipe main body 10. The pipe main body 10 includes a first end portion 10A and a second end portion 10B. The first end portion 10A is disposed on the opposite side to the second end portion 10B. As described above, in the T&C type oil-well metal pipe 1, the pipe main body 10 includes the pin tube body 11 and the coupling 12. That is, in the T&C type oil-well metal pipe 1, the pipe main body 10 is constituted by fastening two separate members (the pin tube body 11 and the coupling 12). In contrast, in the integral type oil-well metal pipe 1, the pipe main body 10 is formed in an integral manner.

The pin 40 is formed at the first end portion 10A of the pipe main body 10. At the time of fastening, the pin 40 is inserted in and screwed into the box 50 of another integral type oil-well metal pipe 1, and thereby fastened to the box 50 of the other integral type oil-well metal pipe 1. The box 50 is formed at the second end portion 10B of the pipe main body 10. At the time of fastening, the pin 40 of another integral type oil-well metal pipe 1 is inserted in and screwed into the box 50, and thereby fastened to the pin 40 of the other integral type oil-well metal pipe 1.

The structure of the pin 40 of the integral type oil-well metal pipe 1 is the same as the structure of the pin 40 of the T&C type oil-well metal pipe 1 illustrated in FIG. 5. Similarly, the structure of the box 50 of the integral type oil-well metal pipe 1 is the same as the structure of the box 50 of the T&C type oil-well metal pipe 1 illustrated in FIG. 6. Note that, in FIG. 5 and FIG. 6, the pin shoulder surface 43, the pin sealing surface 42 and the external thread part 41 are disposed in that order in the pin 40 from the front end of the first end portion 10A toward the center of the pipe main body 10. Therefore, the internal thread part 51, the box sealing surface 52 and the box shoulder surface 53 are disposed in that order in the box 50 from the front end of the second end portion 10B toward the center of the pipe main body 10. However, similarly to the pin contact surface 400 of the pin 40 of the T&C type oil-well metal pipe 1, it suffices that the pin contact surface 400 of the pin 40 of the integral type oil-well metal pipe 1 includes at least the external thread part 41. Further, similarly to the box contact surface 500 of the box 50 of the T&C type oil-well metal pipe 1, it suffices that the box contact surface 500 of the box 50 of the integral type oil-well metal pipe 1 includes at least the internal thread part 51.

In short, the oil-well metal pipe 1 of the present embodiment may be of a T&C type or may be of an integral type.

### [Resin coating]

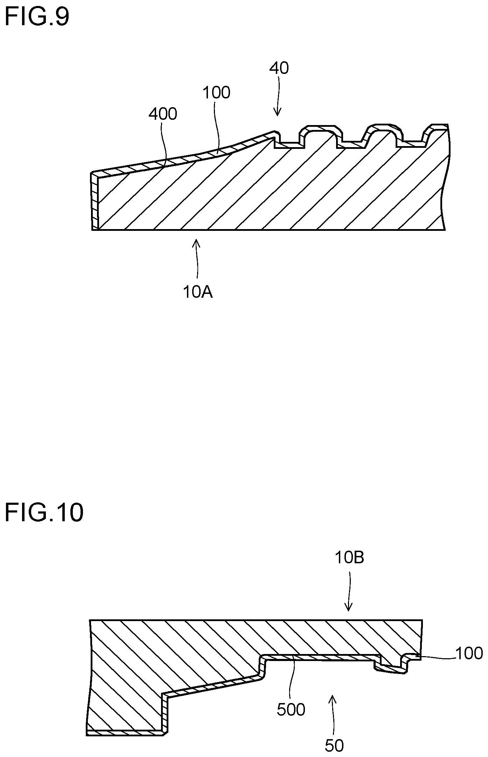

An oil-well metal pipe 1 according to the present embodiment includes a resin coating 100 formed as an uppermost layer on a pin contact surface 400 and/or on a box contact surface 500. FIG. 9 is a cross-sectional view of a vicinity of the pin contact surface 400 of the oil-well metal pipe 1 according to the present embodiment. FIG. 10 is a cross-sectional view of a vicinity of the box contact surface 500 corresponding to FIG. 9.

With reference to FIG. 9, the resin coating 100 may be formed as an uppermost layer on the pin contact surface 400. In this case, the resin coating 100 may or may not be formed as an uppermost layer on the corresponding box contact surface 500. Further, with reference to FIG. 10, the resin coating 100 may be formed as an uppermost layer on the box contact surface 500. In this case, the resin coating 100 may or may not be formed as an uppermost layer on the corresponding pin contact surface 400. In short, the oil-well metal pipe 1 according to the present embodiment has a resin coating 100 formed as an uppermost layer on the pin contact surface 400 and/or on the box contact surface 500.

The resin coating 100 contains an epoxy resin. If the content of epoxy resin in the resin coating 100 is 15 mass% or more, the resin coating 100 can be formed more stably. On the other hand, if the content of epoxy resin in the resin coating 100 is 80 mass% or less, a predetermined coating thickness can be secured more stably. Therefore, the content of epoxy resin in the resin coating 100 is, for example, 15 to 80 mass%. The lower limit of the content of epoxy resin in the resin coating 100 is preferably 18 mass%, more preferably 20 mass%, further preferably 25 mass%, and further preferably 30 mass%. The upper limit of the content of epoxy resin in the resin coating 100 is preferably 70 mass%, more preferably 65 mass%, and further preferably 60 mass%.

### [Measurement method of content of epoxy resin]

The content of epoxy resin in the resin coating 100 is measured by reflux extraction (Soxhlet extraction) using a solvent. Specifically, reflux extraction is performed on the resin coating 100 using methyl ethyl ketone as a solvent. Specifically, the resin coating 100 in an amount required for measurement is scraped off from the pin contact surface 400 or the box contact surface 500, and reflux extraction is performed. Reflux extraction is carried out for 4 hours using 0.4 L of methyl ethyl ketone on 5 pieces of resin coating 100 having a thickness of 20 µm, a length of 120 mm, and a width of 15 mm. When the thickness of the resin coating 100 is more than 20 µm, the number of pieces of the resin coating 100 is adjusted so as to have the same volume as that of the aforementioned resin coating 100. Similarly, when the thickness of the resin coating 100 is less than 20 µm, the number of pieces of the resin coating 100 is adjusted so as to have the same volume as that of the aforementioned resin coating 100. The weight of the resin coating 100 after reflux extraction corresponds to the weight of the epoxy resin. Therefore, the content of the epoxy resin in the resin coating 100 is determined by dividing the weight of the resin coating 100 after reflux extraction by the weight of the resin coating 100 before reflux extraction.

### [Relaxation time of pulse NMR]

When the resin coating 100 is measured by ¹H pulse nuclear magnetic resonance (NMR) method and an obtained free induction decay signal is separated into three components of a high mobility component, a medium mobility component, and a low mobility component in the order from the component having a longer spin-spin relaxation time T₂, a weighted average value of the spin-spin relaxation time T₂ of the three components is 110.0 µs or less. As described above, the shorter the relaxation time obtained by the pulse NMR method, the higher the crosslink density. If the crosslink density of the resin coating 100 is high, the torque-on-shoulder resistance ΔT increases. In this case, the high-torque performance of the oil-well metal pipe 1 is enhanced.

The lower limit of the weighted average value of the spin-spin relaxation time T₂ of the resin coating 100 is not particularly limited, but is, for example, 0.5 µs. The lower limit of the weighted average value of the spin-spin relaxation time T₂ of the resin coating 100 is preferably 3.0 µs, more preferably 5.0 µs, further preferably 10.0 µs, further preferably 15.0 µs, further preferably 20.0 µs, and further preferably 25.0 µs. The upper limit of the weighted average value of the spin-spin relaxation time T₂ of the three components is preferably 100.0 µs, more preferably 90.0 µs, further preferably 80.0 µs, further preferably 70.0 µs, further preferably 60.0 µs, further preferably 50.0 µs, and further preferably 45.0 µs.

### [Ratio of medium mobility component]

Preferably, when the resin coating 100 is measured by a ¹H pulse NMR method, the ratio of the medium mobility component to the total of the high mobility component, the medium mobility component, and the low mobility component is higher than the ratio of the low mobility component to the same. The distance between crosslink points of the molecular chain of the medium mobility component is larger than the distance between crosslink points of the molecular chain of the low mobility component. In other words, the medium mobility component has a lower crosslink density than that of the low mobility component. Therefore, the medium mobility component is less constrained by cross-linking than the low mobility component. Compared with the low mobility component, in the medium mobility component, the molecular chain is more likely to deform and expand under strong shear stress during fastening and loosening. If the ratio of the medium mobility component is higher than the ratio of the low mobility component, the resin coating 100 is likely to be deformed in shear, so that the peeling of the resin coating 100 is likely to be suppressed.

### [Measurement method of relaxation time of pulse NMR]

The weighted average value of the spin-spin relaxation time T₂ of the resin coating 100 is determined by the following method. A decay curve (free induction decay signal) of the magnetization strength of the resin coating 100 is obtained by a pulse NMR method using a nuclear magnetic resonance measuring apparatus (NMR apparatus). Specifically, an NMR apparatus having an observation frequency of 20 MHz is used. Measurements are performed under conditions of: measurement method: solid echo method, observed nucleus: ¹H, measurement target: spin-spin relaxation time T₂ (µs), RF pulse width: 2.50 to 3.50 µs, pulse interval: 5.00 to 15.00 µs, repetition time: 4 seconds, number of integrations: 32 times, measurement temperature: 35°C. The least squares method is used to match the resulting decay curve with a fitting curve. The Lorentz function is used for a straight line portion, and the Gaussian function is used for a curved line portion. From the fitting curve, components are subtracted in order from one with a longer spin-spin relaxation time T₂. As a result, the waveform is separated into three components: a high mobility component having relatively high mobility, a medium mobility component having relatively moderate mobility, and a low mobility component having relatively low mobility. The spin-spin relaxation time T₂ of the high mobility component, the spin-spin relaxation time T₂ of the medium mobility component, and the spin-spin relaxation time T₂ of the low mobility component are determined. The ratio of the high mobility component, the ratio of the medium mobility component, and the ratio of the low mobility component to the total of the high mobility component, the medium mobility component, and the low mobility component are determined. The spin-spin relaxation time T₂ of each component is multiplied by the ratio of each component. The spin-spin relaxation time T₂ multiplied by the ratio of each component is summed, and the weighted average value of the spin-spin relaxation time T₂ is determined.

### [Lubricant material]

The resin coating 100 may further contain a lubricant material. The lubricant material is not particularly limited as long as it is a material that enhances the lubricity of the resin coating 100. The lubricant material is, for example, one or more kinds selected from the group consisting of graphite, zinc oxide, boron nitride, talc, molybdenum disulfide, tungsten disulfide, graphite fluoride, tin sulfide, bismuth sulfide, organic molybdenum, thiosulfate, polytetrafluoroethylene (PTFE), melamine cyanurate (MCA), and perfluoropolyether (PFPE). The total content of the lubricant material in the resin coating 100 is, for example, 0.1 to 25 mass%.

### [Other materials]

The resin coating 100 may contain other materials. Other materials is, for example, one or more kinds selected from the group consisting of pigments, rust preventive additives, and preservatives. The content of other materials in the resin coating 100 is, for example, 0.1 to 25 mass%.

### [Thickness of resin coating]

The thickness of the resin coating 100 is not particularly limited. The thickness of the resin coating 100 is, for example, 1 to 100 µm.

### [Other layers]

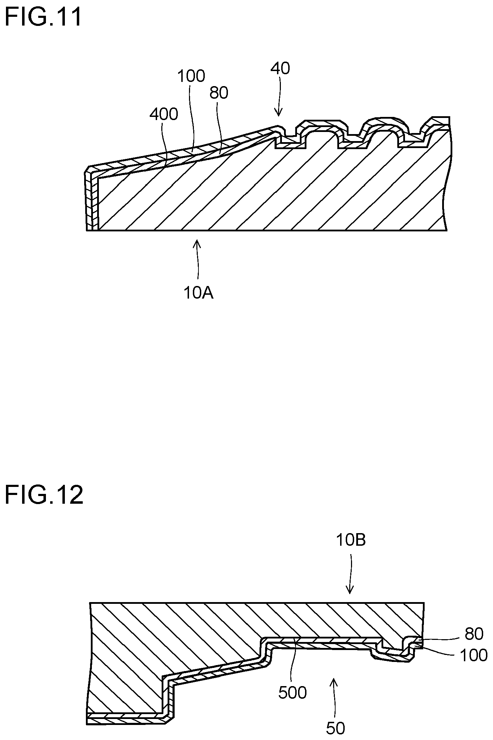

The oil-well metal pipe 1 according to the present embodiment may include another layer 80 between the pin contact surface 400 and the resin coating 100 of an uppermost layer, and/or between the box contact surface 500 and the resin coating 100. With reference to FIG. 11, another layer 80 may be provided in a lower layer of the resin coating 100 of an uppermost layer, that is, between the pin contact surface 400 and the resin coating 100. With reference to FIG. 12, another layer 80 may be provided in a lower layer of the resin coating 100, that is, between the box contact surface 500 and the resin coating 100 of an uppermost layer.

The other layer 80 is, for example, one or more kinds selected from the group consisting of a phosphate coating, a plating layer, a chromate coating, and a zirconium coating. The phosphate coating is selected from, for example, the group consisting of a zinc phosphate coating, a manganese phosphate coating, a calcium phosphate coating, and an iron phosphate coating. A plurality of other layers 80 may be laminated in the radial direction of the oil-well metal pipe 1. For example, the plating layer may be disposed on the pin contact surface 400, the chromate coating may be disposed on the plating layer, and the resin coating 100 of an uppermost layer may be disposed on the chromate coating.

### [Chemical composition of pipe main body]

The chemical composition of the pipe main body 10 of the oil-well metal pipe 1 according to the present embodiment is not particularly limited. The pipe main body 10 may be formed of, for example, carbon steel, stainless steel, an alloy steel, or the like. The oil-well metal pipe 1 may be a pipe made of a Fe-based alloy or an alloy pipe represented by a Ni-based alloy pipe. Here, the pipe is, for example, a low-alloy pipe, a martensitic stainless steel pipe, and a duplex stainless steel pipe, etc. Among alloy steels, Ni alloys and high alloy steels such as duplex stainless steels that contain alloying elements such as Cr, Ni and Mo have high corrosion resistance. Therefore, using these high alloy steels as the pipe main body 10 will enable to obtain excellent corrosion resistance in a corrosive environment that contains hydrogen sulfide or carbon dioxide or the like.

### [Production method]

Hereinafter, a method for producing the oil-well metal pipe 1 according to the present embodiment will be described.

The method for producing an oil-well metal pipe 1 according to the present embodiment includes a preparation process, a composition application process, and a composition curing process.

### [Preparation process]

In the preparation process, the oil-well metal pipe 1 including a pipe main body 10 that includes a pin 40 including a pin contact surface 400 with an external thread part 41, and a box 50 including a box contact surface 500 with an internal thread part 51 is prepared. As described above, the oil-well metal pipe 1 according to the present embodiment has a well-known structure. That is, in the preparation process, it suffices to prepare an oil-well metal pipe 1 that has a well-known structure.

### [Composition application process]

In the composition application process, a composition containing an epoxy resin is applied as an uppermost layer on the pin contact surface 400 and/or on the box contact surface 500. The composition is a composition for forming the above described resin coating 100. The method for making the weighted average value of the spin-spin relaxation time T₂ of the resin coating 100 be 110.0 µs or less is not particularly limited. For example, the composition for forming the resin coating 100 contains an epoxy resin, an acrylic ester curing agent containing an unsaturated bond, and an N-containing catalyst. The acrylic ester curing agent containing an unsaturated bond is selected from, for example, the group consisting of 2-ethylhexyl 3-(4-methoxyphenyl)acrylate, ethyl 3-(4-methoxyphenyl)acrylate, isopentyl 4-methoxycinnamate, and isopropyl cinnamate. The N-containing catalyst is selected from, for example, the group consisting of 2-methylpyrazine, 2,5-dimethylpyrazine, 3,5-dimethylpyridine, and 3-quinucridinol. As another method, the composition for forming the resin coating 100 contains an epoxy resin, an acrylic ester curing agent containing an unsaturated bond, and a nitrile-based curing agent. The acrylic ester curing agent containing an unsaturated bond is selected from, for example, the group consisting of 2-ethylhexyl 3-(4-methoxyphenyl)acrylate, ethyl 3-(4-methoxyphenyl)acrylate, isopentyl 4-methoxycinnamate, and isopropyl cinnamate. The nitrile-based curing agent is selected from, for example, the group consisting of 4-methyl-2-oxopentanenitrile, ethyl cyanoacetate, dimethyl dicyanomethane, 2-methyl-2-phenylpropanenitrile, and 4,4-dimethyl-3-oxopentanenitrile. For example, if the composition for forming the resin coating 100 has the above composition, the weighted average value of the spin-spin relaxation time T₂ of the resin coating 100 can be adjusted to be 110.0 µs or less. The composition for forming the resin coating 100 may contain a solvent, if necessary. The solvent is, for example, one or more kinds selected from the group consisting of water, alcohol, and an organic solvent. The solvent may contain a trace amount of surfactant. The percentage of the solvent is not particularly limited. The percentage of the solvent is, for example, 40 to 100 mass% assuming that the total of all components other than the solvent is 100 mass%.

Hereinafter, the composition for forming the resin coating 100 is also referred to simply as a composition. The method for applying the composition on the pin contact surface 400 and/or on the box contact surface 500 is not particularly limited, and a well-known method may be used. For example, the composition in a solution can be applied by spraying onto the pin contact surface 400 and/or onto the box contact surface 500. In this case, the viscosity of the composition is adjusted so that it can be applied by spray in an environment of normal temperature and normal pressure. The method for applying the composition onto the pin contact surface 400 and/or onto the box contact surface 500 may be brushing, dipping, or the like instead of spray application.

### [Composition curing process]

In the composition curing process, the applied composition is cured to form the resin coating 100. The composition is cured, for example, at 5 to 30°C for 3 to 16 hours, or at 30 to 70°C for 5 to 180 minutes.

By the above described production method, the oil-well metal pipe 1 according to the present embodiment can be produced.

### [Other processes]

The oil-well metal pipe 1 according to the present embodiment may include other processes in the production process. The other processes are, for example, one or more kinds selected from a group consisting of a phosphate coating forming process, a plating process, a chromate coating forming process, a zirconium coating forming process, and a sandblasting treatment.

### [Phosphate coating forming process]

In the phosphate coating forming process, the pin contact surface 400 and/or the box contact surface 500 of the oil-well metal pipe 1 is subjected to a phosphate chemical conversion treatment to form a phosphate coating. As the treatment solution for the phosphate chemical conversion treatment, a well-known phosphate chemical conversion treatment solution can be used. As the treatment solution, for example, a zinc phosphate chemical conversion treatment solution containing: phosphate ion: 1 to 150 g/L, zinc ion: 0.5 to 30 g/L, nitrate ion: 1 to 100 g/L, nickel ion: 0 to 10 g/L, and manganese ion: 0 to 10 g/L can be used. As the phosphate chemical conversion treatment solution, a manganese phosphate chemical conversion treatment solution, which is commonly used in the oil-well metal pipe 1, can also be used. The solution temperature of the phosphate chemical conversion treatment solution is, for example, from room temperature to 95°C. The treatment time of the phosphate chemical conversion treatment can be appropriately set according to a desired coating thickness, and is, for example, 0.5 to 15 minutes.

### [Plating process]

In the plating process, the pin contact surface 400 and/or the box contact surface 500 of the oil-well metal pipe 1 is subjected to a plating treatment to form a plating layer. The plating treatment can be carried out by a well-known method. The plating treatment is, for example, electroplating.

When forming a Zn-Ni alloy plating layer as a plating layer, the plating bath contains zinc ions and nickel ions. The composition of the plating bath is, for example, Zn: 1 to 100 g/L and Ni: 1 to 50 g/L. The conditions for electroplating can be set as appropriate. For example, the plating treatment can be carried out with the pH of the plating bath being 1 to 10, the temperature of the plating bath being 30 to 80°C, the current density being 1 to 100 A/dm², and the treatment time being 0.1 to 30 minutes.

### [Chromate coating forming process]

In the chromate coating forming process, the pin contact surface 400 and/or the box contact surface 500 of the oil-well metal pipe 1 is subjected to chromate treatment to form a chromate coating. As the chromate treatment solution, a well-known chromate treatment solution can be used. The solution temperature of the chromate treatment solution is, for example, from room temperature to 95°C. The treatment time of the chromate treatment can be appropriately set according to the desired coating thickness, and is, for example, 0.5 to 15 minutes.

### [Zirconium coating forming process]

In the zirconium coating forming process, the oil-well metal pipe 1 is subjected to a zirconium chemical conversion treatment to form a zirconium oxide coating. The zirconium chemical conversion treatment can be carried out by a well-known method. The zirconium chemical conversion treatment may be carried out by, for example, immersing the pin contact surface 400 and/or the box contact surface 500 in the treatment solution. The zirconium chemical conversion treatment may be carried out by sprinkling the solution on the pin contact surface 400 and/or on the box contact surface 500. Further, the zirconium chemical conversion treatment solution is commercially available. Further, the treatment conditions in the zirconium coating forming process can be appropriately set. For example, the zirconium chemical conversion treatment can be carried out with the concentration of the treatment solution being 3 to 20 g/L, the temperature of the treatment solution being 20 to 45°C, and the treatment time being 30 to 240 seconds.

By the processes described so far, the oil-well metal pipe 1 according to the present embodiment is produced. However, the above-described production method is one example of the production method of the oil-well metal pipe 1 according to the present embodiment, and this production method is not limiting. The oil-well metal pipe 1 according to the present embodiment may be produced by any other method.

### [Example]

Hereinafter, advantageous effects of the oil-well metal pipe of the present embodiment will be described more specifically by way of examples. The condition in the following examples is one exemplary condition adopted for confirming the feasibility and advantageous effects of the oil-well metal pipe of the present embodiment. Therefore, the oil-well metal pipe of the present embodiment is not limited to this one exemplary condition.

A commercially available cold-rolled steel plate was used, assuming the pipe main body of an oil-well metal pipe. The size of the cold-rolled steel sheet was 150 mm in length and 70 mm in width. The steel grade was SPCC steel specified in JIS G 3141 (2021).

### [Composition application process]

The composition was applied to the surface of the cold-rolled steel plate. The composition of Test Number 1 contained an epoxy resin, 2-ethylhexyl 3-(4-methoxyphenyl)acrylate, 2-methylpyrazine, and water as the solvent. The composition of Test Number 2 contained an epoxy resin, 2-ethylhexyl 3-(4-methoxyphenyl)acrylate, 4-methyl-2-oxopentanenitrile, and water as the solvent. The composition of Test Number 3 contained an epoxy resin, 2-ethylhexyl 3-(4-methoxyphenyl)acrylate, 3,5-dimethylpyridine, and water as the solvent. The composition of Test Number 4 contained an epoxy resin. However, the composition of Test Number 4 did not contain any of the acrylic ester curing agent containing an unsaturated bond, the N-containing catalyst, and the nitrile-based curing agent. The composition of Test Number 5 contained an epoxy resin and 2-ethylhexyl 3-(4-methoxyphenyl)acrylate. However, the composition of Test Number 5 contained neither the N-containing catalyst nor the nitrile-based curing agent.

### [Composition curing process]

The composition of each test number was cured. Specifically, the cold-rolled steel plate on which the composition was applied was heated at 50 to 70°C for 5 minutes in a heating furnace. As a result, a resin coating was formed.

### [Measurement test of relaxation time of pulse NMR]

The weighted average value of the spin-spin relaxation time T₂ of the resin coating of each test number was determined by the following method. A decay curve (free induction decay signal) of the magnetization strength of the resin coating was obtained by a pulse NMR method using an NMR apparatus (Minispec mq20 (20 MHz) manufactured by Bruker Japan K.K.). Specifically, measurement was performed under conditions of: observation frequency: 20 MHz, measurement method: solid echo method, observation nucleus: ¹H, measurement target: spin-spin relaxation time T₂ (µs), RF pulse width: 3.06 µs, pulse interval: 10.00 µs, repetition time: 4 seconds, number of integrations: 32 times, measurement temperature: 35°C. The least squares method was used to match the resulting decay curve with a fitting curve. The Lorentz function was used for the straight line portion, and the Gaussian function was used for the curved line portion. From the fitting curve, components were subtracted in order from one with a longer spin-spin relaxation time T₂. As a result, the waveform was separated into three components: a high mobility component having relatively high mobility, a medium mobility component having relatively moderate mobility, and a low mobility component having relatively low mobility. The spin-spin relaxation time T₂ of the high mobility component, the spin-spin relaxation time T₂ of the medium mobility component, and the spin-spin relaxation time T₂ of the low mobility component were determined. The ratio of the high mobility component, the ratio of the medium mobility component, and the ratio of the low mobility component to the total of the high mobility component, the medium mobility component, and the low mobility component were determined. The spin-spin relaxation time T₂ of each component was multiplied by the ratio of each component. The spin-spin relaxation time T₂ multiplied by the ratio of each component was summed up, and a weighted average value of the spin-spin relaxation time T₂ was determined. The results are shown in Table 1.

### [Table 1]

**TABLE 1**

| | | Test Number 1 | Test Number 2 | Test Number 3 | Test Number 4 | Test Number 5 |
|---|---|---|---|---|---|---|
| Low mobility component | Ratio (%) | 32.2 | 31.1 | 33.4 | 41.6 | 34.2 |
| | Relaxation time T₂ (µs) | 13.7 | 12.3 | 11.2 | 11.5 | 12.8 |
| Medium mobility component | Ratio (%) | 67.8 | 39.1 | 44.1 | 37.5 | 36.7 |
| | Relaxation time T₂ (µs) | 53.0 | 35.7 | 29.0 | 43.0 | 35.0 |
| High mobility component | Ratio (%) | - | 29.8 | 22.6 | 20.9 | 29.1 |
| | Relaxation time T₂ (µs) | - | 269.0 | 180.0 | 458.0 | 361.0 |
| Weighted average value of relaxation time T₂ (µs) | | 40.3 | 97.9 | 57.2 | 116.6 | 122.3 |
| Torque-on-shoulder resistance (ft. lb) | | 146262 | 147701 | 159327 | 104039 | 129310 |

### [Torque-on-shoulder resistance measurement test]

A Bowden sliding test was performed on a cold-rolled steel plate of each test number, on which the resin coating was formed, under the following conditions. Using a Bowden type sliding tester manufactured by Shinko Engineering Co., Ltd., friction coefficient was measured under conditions of: steel ball: 3/16" SUJ2, load: 3 kgf, sliding width: 10 mm, sliding speed: 4 mm/s, lubricating oil: none (no oiling), test temperature: normal temperature (25°C). Counting on to-and-fro sliding as one sliding, an arithmetic mean value of the first to fifth friction coefficient from the start of sliding was used as the initial friction coefficient. The shouldering torque and the yield torque were determined by an FEM analysis using the initial friction coefficient. The FEM analysis assumed an oil-well metal pipe having the configuration shown in Figures 3, 5, and 6, with an outside diameter of 9"-5/8 and a yield strength of 552 to 655 MPa. In the oil-well metal pipe, the pin contact surface included the external thread part, the pin sealing surface, and the pin shoulder surface, while the box contact surface included the internal thread part, the box sealing surface, and the box shoulder surface. In the FEM analysis, it was assumed that only the pin contact surface was covered with a resin coating. The torque-on-shoulder resistance ΔT was determined by subtracting the shouldering torque from the yield torque. The results are shown in Table 1.

### [Evaluation results]

With reference to Table 1, in Test Number 1 to Test Number 3, the resin coating contained an epoxy resin, and the weighted average value of spin-spin relaxation time T₂ of the high mobility component, the medium mobility component, and the low mobility component obtained by ¹H pulse NMR was 110.0 µs or less. As a result, the torque-on-shoulder resistance ΔT of the resin coatings of Test

Number 1 to Test Number 3 was higher than the torque-on-shoulder resistance ΔT of the resin coatings of Test Number 4 and Test Number 5. The resin coatings of Test Number 1 to Test Number 3 were able to enhance the high-torque performance of the oil-well metal pipe.

On the other hand, in Test Number 4 and Test Number 5, the weighted average value of the spin-spin relaxation time T₂ of the high mobility component, the medium mobility component, and the low mobility component obtained by ¹H pulse NMR was more than 110.0 µs. As a result, the torque-on-shoulder resistance ΔT of the resin coatings of Test Number 4 and Test Number 5 was lower than the torque-on-shoulder resistance ΔT of the resin coatings of Test Number 1 to Test Number 3. The resin coatings of Test Number 4 and Test Number 5 were not able to enhance the high-torque performance of the oil-well metal pipe.

The invention is defined by the features specified in the appended claims.

### REFERENCE SIGNS LIST

- 1: Oil-well metal pipe
- 10: Pipe main body
- 10A: First end portion
- 10B: Second end portion
- 11: Pin tube body
- 12: Coupling
- 40: Pin
- 41: External thread part
- 42: Pin sealing surface
- 43: Pin shoulder surface
- 50: Box
- 51: Internal thread part
- 52: Box sealing surface
- 53: Box shoulder surface
- 100: Resin coating
- 400: Pin contact surface
- 500: Box contact surface

## Claims

1. An oil-well metal pipe (1), comprising:
a pipe main body including a first end portion (10A) and a second end portion (10B),
the pipe main body (10) including:
a pin (40) formed in the first end portion (10A); and
a box (50) formed in the second end portion (10B); wherein:
the pin (40) includes a pin contact surface (400) including an external thread part (41); and
the box (50) includes a box contact surface (500) including an internal thread part (51),
the oil-well metal pipe (1) further comprising a resin coating (100) formed as an uppermost layer on the pin contact surface (400) and/or on the box contact surface (500), wherein:
the resin coating contains an epoxy resin, and **characterised in that**,
when the resin coating is measured by a ¹H pulse NMR method, and an obtained free induction decay signal is separated into three components of a high mobility component, a medium mobility component, and a low mobility component in the order from a component having a longer spin-spin relaxation time T₂, a weighted average value of the spin-spin relaxation time T₂ of the three components is 110.0 µs or less.

2. The oil-well metal pipe according to claim 1, wherein
when the resin coating is measure by the ¹H pulse NMR method, a ratio of the medium mobility component to a total of the high mobility component, the medium mobility component, and the low mobility component is higher than the ratio of the low mobility component to the total.

3. The oil-well metal pipe according to claim 1 or 2, further comprising:
one or more kinds selected from a group consisting of a phosphate coating, a plating layer, a chromate coating, and a zirconium coating between the pin contact surface and the resin coating, and/or between the box contact surface and the resin coating.

## Patentansprüche

1. Metallrohr (1) für Ölbohrlöcher, das umfasst:
einen Rohrhauptkörper mit einem ersten Endabschnitt (10A) und einem zweiten Endabschnitt (10B),
wobei der Rohrhauptkörper (10) enthält:
einen im ersten Endabschnitt (10A) gebildeten Stift (40); und
ein im zweiten Endabschnitt (10B) gebildetes Gehäuse (50);
wobei:
der Stift (40) eine Stiftkontaktfläche (400) mit einem Außengewindeabschnitt (41) enthält; und
das Gehäuse (50) eine Gehäusekontaktfläche (500) mit einem Innengewindeabschnitt (51) enthält,
wobei das Metallrohr für Ölbohrlöcher (1) ferner eine Harzbeschichtung (100) enthält, die als oberste Schicht auf der Stiftkontaktfläche (400) und/oder auf der Gehäusekontaktfläche (500) gebildet ist, wobei:
die Harzbeschichtung ein Epoxidharz enthält, und **dadurch gekennzeichnet, dass**,
wenn die Harzbeschichtung mittels eines ¹H-Puls-NMR-Verfahrens gemessen wird und ein erhaltenes Signal des freien Induktionsabklingens in drei Komponenten - eine Komponente mit hoher Mobilität, eine Komponente mit mittlerer Mobilität und eine Komponente mit niedriger Mobilität - in der Reihenfolge von der Komponente mit der längsten Spin-Spin-Relaxationszeit T₂ getrennt wird, ein gewichteter Mittelwert der Spin-Spin-Relaxationszeit T₂ der drei Komponenten 110,0 µs oder weniger beträgt.

2. Metallrohr für Ölbohrlöcher nach Anspruch 1, wobei
bei der Messung der Harzbeschichtung mittels des ¹H-Puls-NMR-Verfahrens das Verhältnis der Komponente mit mittlerer Mobilität zur Summe aus der Komponente mit hoher Mobilität, der Komponente mit mittlerer Mobilität und der Komponente mit niedriger Mobilität höher ist als das Verhältnis der Komponente mit niedriger Mobilität zur Summe.

3. Metallrohr für Ölbohrlöcher nach Anspruch 1 oder 2, das ferner umfasst:
eine oder mehrere Arten, ausgewählt aus einer Gruppe bestehend aus einer Phosphatbeschichtung, einer Galvanisierungsbeschichtung, einer Chromatbeschichtung und einer Zirkoniumbeschichtung zwischen der Stiftkontaktfläche und der Harzbeschichtung und/oder zwischen der Gehäusekontaktfläche und der Harzbeschichtung.

## Revendications

1. Tuyau en métal pour puits de pétrole (1), comprenant :
un corps principal de tuyau comprenant une première portion d'extrémité (10A) et une deuxième portion d'extrémité (10B),
le corps principal de tuyau (10) comprenant :
une partie mâle (40) formée dans la première portion d'extrémité (10A), et
une partie femelle (50) formée dans la deuxième portion d'extrémité (10B), étant entendu que :
la partie mâle (40) comprend une surface de contact mâle (400) comprenant une partie filetée extérieure (41), et
la partie femelle (50) comprend une surface de contact femelle (500) comprenant une partie filetée intérieure (51),
le tuyau en métal pour puits de pétrole (1) comprenant en outre un revêtement en résine (100) formant la couche la plus supérieure de la surface de contact mâle (400) et/ou de la surface de contact femelle (500) ;
ledit revêtement en résine contenant une résine époxy, et le tuyau étant **caractérisé en ce que**, lorsque le revêtement en résine est analysé selon une méthode RMN à impulsions ¹H et qu'un signal de décroissance d'induction libre obtenu est séparé en trois composantes dont une composante à haute mobilité, une composante à mobilité moyenne et une composante à faible mobilité, dans un ordre partant d'une composante présentant le temps de relaxation spin-spin T₂ le plus long, la valeur moyenne pondérée du temps de relaxation spin-spin T₂ des trois composantes est inférieure ou égale à 110,0 µs.

2. Tuyau en métal pour puits de pétrole selon la revendication 1, dans lequel :
lorsque le revêtement en résine est analysé selon la méthode RMN à impulsions ¹H, le rapport de la composante à mobilité moyenne au total de la composante à haute mobilité, la composante à mobilité moyenne et la composante à faible mobilité est supérieur au rapport de la composante à faible mobilité au total.

3. Tuyau en métal pour puits de pétrole selon la revendication 1 ou 2, comprenant en outre :
un ou plusieurs éléments choisis dans un groupe constitué par un revêtement de phosphate, une couche de placage, un revêtement de chromate et un revêtement de zirconium, situés entre la surface de contact mâle et le revêtement en résine et/ou entre la surface de contact femelle et le revêtement en résine.
